# EUROPEAN PATENT APPLICATION

(11) **EP 4 187 500 A1**
(43) Date of publication of application: **31.05.2023**
(21) Application number: 22210090.1
(22) Date of filing: 29.11.2022
(51) Int. Cl.: G06V 20/52, G06V 10/82, G06V 20/40

(54) **METHOD AND APPARATUS OF DETECTING EVENT, DEVICE, STORAGE MEDIUM AND PROGRAM PRODUCT**

(30) Priority: 30.11.2021 CN 202111444902
(71) Applicant: Beijing Baidu Netcom Science Technology Co., Ltd., Beijing 100085 (CN)
(72) Inventor: Du, Yuting, Beijing, 100085 (CN); Dai, Xu, Beijing, 100085 (CN); Sun, Mengyao, Beijing, 100085 (CN)
(74) Representative: Hoffmann Eitle

(57) **Abstract**

A method of detecting an event, a device, a storage medium and a program product are provided, which are related to a field of computer technology, in particular to a field of artificial intelligence technology, such as image processing and cloud computing. The method includes: determining a first target object according to a first image; determining a second target object and a category of the second target object according to a second image; associating a first target object with the category of the second target object to obtain a first event information; and comparing the first event information with a detection threshold to obtain a first event detection result.

## Description

### TECHNICAL FIELD

The present disclosure relates to a field of computer technology, in particular to artificial intelligence technology, such as image processing and cloud computing. Specifically, the present disclosure relates to a method and an apparatus of detecting an event, a device, a storage medium and a program product.

### BACKGROUND

At present, with a development of Internet and artificial intelligence technology, automation is increasingly applied in various aspects of life and production.

### SUMMARY

The present disclosure provides a method and an apparatus of detecting an event, a device, a storage medium and a program product.

According to an aspect of the present disclosure, there is provided a method of detecting an event, including determining a first target object according to a first image; determining a second target object and a category of the second target object according to a second image; associating the first target object with the category of the second target object to obtain a first event information; and comparing the first event information with the detection threshold to obtain a first event detection result.

According to another aspect of the present disclosure, there is provided an apparatus of detecting an event, including a first target object determining module, a second target object determining module, a first event information determining module, and a detection result determining module. The first target object determining module is configured to determine a first target object according to a first image. The second target object determining module is configured to determine a second target obj ect and a category of the second target object according to a second image. The first event information determining module is configured to associate the first target object with the category of the second target object to obtain a first event information. The detection result determining module is configured to compare the first event information with a detection threshold to obtain a first event detection result.

According to another aspect of the present disclosure, there is provided an electronic device including at least one processor; and a memory communicatively coupled with the at least one processor; wherein the memory stores instructions executable by the at least one processor, and the instructions when executed by the at least one processor to enable the at least one processor to perform the method according to the embodiments of the present disclosure.

According to another aspect of the present disclosure, there is provided a non-transitory computer readable storage medium storing computer instructions, wherein the computer instructions are configured to cause a computer to perform the method according to the embodiments of the present disclosure.

According to another aspect of the present disclosure, there is provided a computer program product including a computer program, wherein the computer program, when executed by a processor, implements the method according to the embodiments of the present disclosure.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, and wherein:
FIG. 1 schematically shows a system architecture in which a method and an apparatus of detecting an event according to embodiments of the present disclosure are applicable;
FIG. 2 schematically shows a flowchart of a method of detecting an event according to an embodiment of the present disclosure;
FIG. 3 schematically shows a schematic diagram of a method of detecting an event according to another embodiment of the present disclosure;
FIG. 4 schematically shows a schematic diagram of a method of detecting an event according to another embodiment of the present disclosure;
FIG. 5 schematically shows a schematic diagram of a method of detecting an event according to another embodiment of the present disclosure;
FIG. 6 schematically shows a schematic diagram of a method of detecting an event according to another embodiment of the present disclosure;
FIG. 7 schematically shows a block diagram of an apparatus of detecting an event according to an embodiment of the present disclosure;
FIG. 8 schematically shows a block diagram of an electronic device used to implement the method of detecting an event of the embodiment of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

The system architecture in which a method and an apparatus of detecting an event according to embodiments of the present disclosure are applicable are described below.

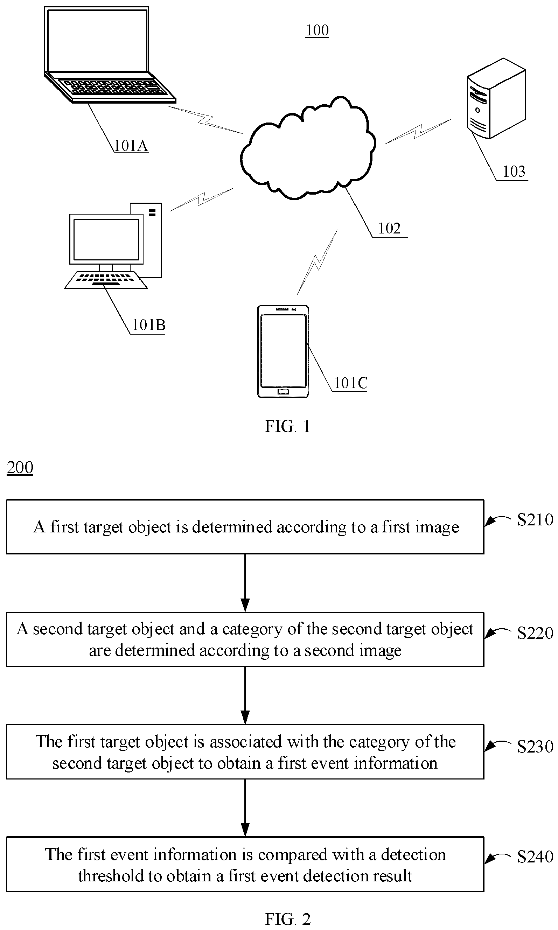

FIG. 1 schematically shows a system architecture in which a method and an apparatus of detecting an event according to embodiments of the present disclosure are applicable. It should be noted that FIG. 1 is only an example of the system architecture to which the embodiments of the present disclosure may be applied to help those skilled in the art understand the technical content of the present disclosure, but it does not mean that the embodiments of the present disclosure may not be applied to other devices, systems, environments or scenarios.

As shown in FIG. 1, the system architecture 100 according to this embodiment may include clients 101A, 101B, and 101C, a network 102, and a server 103. The network 102 is a medium for providing communication links between the clients 101A, 101B, 101C and the server 103. The network 102 may include various connection types, such as wired, wireless communication links, or fiber optic cables.

The user may use the clients 101A, 101B, and 101C to interact with the server 103 through the network 102 to receive or send messages, etc. Various communication client applications may be installed on the clients 101A, 101B, and 101C, such as navigation applications, web browser applications, search applications, instant messaging tools, email clients, social platform software, etc. (for example only).

The clients 101A, 101B, and 101C may be various electronic devices having a display screen and supporting web browsing, including but not limited to smart phones, tablet computers, laptop computers, desktop computers, and the like. The clients 101A, 101B, and 101C of the embodiment of the present disclosure may execute an application program, for example.

The server 103 may be a server that provides various services, such as a background management server (only for example) that provides support for websites browsed by users using the clients 101A, 101B, and 101C. The background management server may analyze and process the received user request and other data, and feedback the processing results (such as web pages, information, or data obtained or generated according to the user request) to the client. In addition, the server 103 may also be a cloud server, that is, the server 103 has a cloud computing function.

It should be noted that the method of detecting an event provided in the embodiments of the present disclosure may be executed by the server 103. Accordingly, the apparatus of detecting an event provided in the embodiments of the present disclosure may be provided in the server 103. The method of detecting an event provided in the embodiments of the present disclosure may also be executed by a server or a server cluster that is different from the server 103 and may communicate with the clients 101A, 101B, 101C and / or the server 103. Accordingly, the apparatus of detecting an event provided in the embodiments of the present disclosure may also be provided in a server or server cluster different from the server 103 and capable of communicating with the clients 101A, 101B, 101C and / or the server 103.

In one example, the server 103 may obtain the first image, the second image, and the third image from the clients 101A, 101B, and 101C through the network 102.

It should be understood that the number of clients, networks and servers in FIG. 1 is only schematic. There may be any number of clients, networks and servers as desired in practice.

It should be noted that collecting, storing, using, processing, transmitting, providing, and disclosing etc. of the personal information of the user involved in the present disclosure all comply with the relevant laws and regulations, are protected by essential security measures, and do not violate the public order and morals. According to the present disclosure, personal information of the user is acquired or collected after such acquirement or collection is authorized or permitted by the user.

FIG. 2 schematically shows a flowchart of a method of detecting an event according to an embodiment of the present disclosure.

As shown in FIG. 2, the method 200 of detecting an event according to an embodiment of the present disclosure includes operations S210 to S240.

At operation S210, a first target object is determined according to a first image.

At operation S220, a second target object and a category of the second target object are determined according to a second image.

At operation S230, the first target object is associated with the category of the second target object to obtain a first event information.

At operation S240, the first event information is compared with a detection threshold to obtain a first event detection result.

Event detection is related to various aspects of production and life. The event detection results obtained through event detection may, for example, evaluate the compliance of events to help relevant personnel make decisions. The object detected by the method of detecting an event according to the embodiment of the present disclosure may be the first event information obtained by associating the first target object with the category of the second target object.

According to the method of detecting an event of the embodiment of the present disclosure, the first event information may represent an association relationship between the category of the first target object and the second target object, the first event information may represent the entire event, and by comparing the first event information with the detection threshold, accurate first event detection results may be obtained. The method of detecting an event of the embodiment of the present disclosure may also automatically obtain complete first event information, and automatically detect an occurrence of the event, so as to reduce the labor cost, and improve the efficiency and accuracy of event detection.

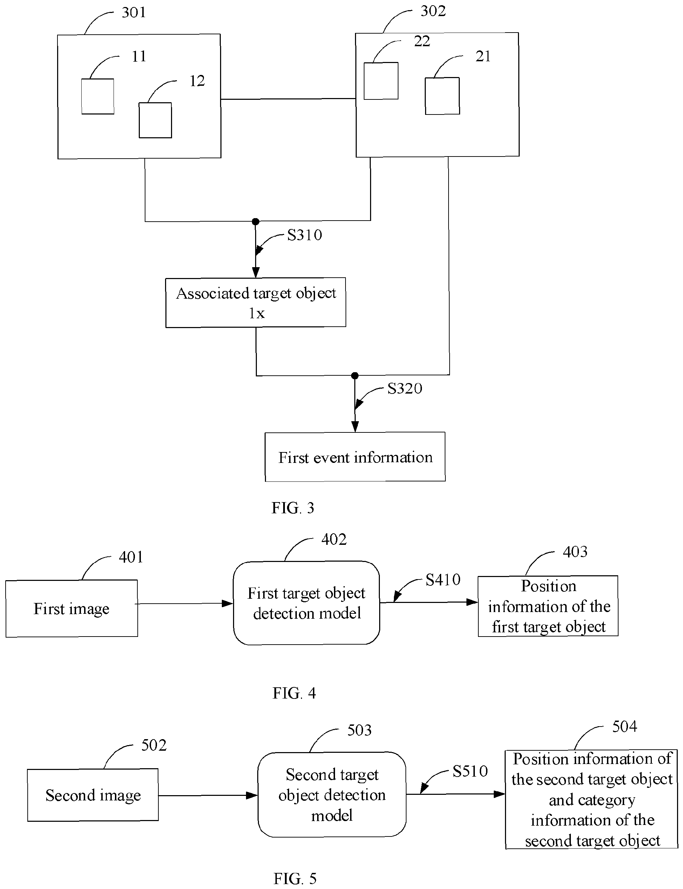

FIG. 3 schematically shows a schematic diagram of obtaining a first event information in the method of detecting an event according to another embodiment of the present disclosure.

According to another embodiment of the present disclosure, a specific example of obtaining the first event information in the method of detecting an event may be implemented as follows. Those skilled in the art may understand that the example method shown in FIG. 3 may be executed after operating the operation S220 shown in FIG. 2, for example, to associate the first target object with the category of the second target object to obtain the first event information.

As shown in FIG. 3, at operation S310, when it is determined that a first image 301 is associated with a second image 302, a first target object closest to a position of a second target object in the first image 301 is determined to be an associated target object, according to a position information of the first target object in the first image 301 and the position information of the second target object in the second image 302.

In some cases, the first target object and the second target object do not appear in the same image, but respectively appear in the first image and the second image. At this time, the first image may be associated with the second image according to a preset association rule, such that the association relationship between the first target object and the second target object may be determined, so as to determine a complete and accurate first event information. For example, the preset association rule may be to associate a first image with a second image which is collected at the same time instant as the first image.

It should be understood that in the above embodiments, the first target object and the second target object appear in different images, that is, the first target object and the second target object respectively appear in the first image 301 and the second image 302. The first target object may be determined according to the first image 301, and the category information of the second target object and the second target object may be determined according to the second image 302.

In another embodiment, the first target object and the second target object may both appear in a certain image M. The position information of the first target object, the category information of the second target object and the second target object may be determined according to the image M.

It should be understood that for specific first event information, the first target object and the second target object having an association relationship are determined. In some cases, the first image may include a plurality of first target objects, and the second image may include a plurality of second target objects. Therefore, it is necessary to accurately determine the first target object and the second target object related to the event information.

As shown in FIG. 3, the first image 301 includes the first target objects 11 and 12. The second image 302 includes the second target objects 21 and 22. A search may be made for each second target object by taking position as priority, so that the first target object closest to the second target object is determined as an associated target object IX. Subsequently, the associated target object, the second target object and the category of the second target object are used to accurately determine the first event information.

At operation S320, the first event information is determined according to the category of the second target object and the associated target object corresponding to the second target object.

The first event information may characterize the associated first target object, the second target object and the category of the second target object to completely characterize the event.

The method of detecting an event according to the embodiment of the present disclosure may, for a second target object, accurately determine the first target object associated with the second target object in the first image as the associated target object, so that accuracy of the first event information determined according to the associated target object and the category of the second target object is also increased.

According to the position information of the first target object in the first image and the position information of the second target object in the second image, determining the first target object closest to the position of the second target object as the associated target object may include: determining the first target object closest to the position of the second target object as the associated target object according to a pixel-based distance mapping relationship between the first image and the second image. The distance mapping relationship may represent information of an actual distance between a certain pixel point of the first image and a certain pixel point of the second image. The center pixel point of a plurality of pixel points where the first target object is located may be taken as the position information of the first target object, and similarly the center pixel point of the second target object may be determined as the position information of the second target object. The first target object closest to the position of the second target object is determined as the associated target object according to the pixel-based distance mapping relationship between the first image and the second image.

FIG. 4 schematically shows a schematic diagram of determining a first target object in the method of detecting an event according to another embodiment of the present disclosure.

According to another embodiment of the present disclosure, a specific example of determining the first target object in the method of detecting an event may be implemented as follows. Those skilled in the art may understand that the example method shown in FIG. 4 may be executed before operation S220 shown in FIG. 2, for example, to determine the first target object according to the first image.

As shown in FIG. 4, at operation S410, the first target object in the first image 401 is detected by using the first target object detection model 402, so as to obtain a position information 403 of the first target object.

The method of detecting an event according to the embodiment of the present disclosure may automatically and accurately determine the first target object and the position information of the first target object in the first image by using the first target object detection model.

Exemplarily, the first image may be preprocessed before the first image is input into the first target object detection model to avoid interference or other adverse effects of the first image on the detection of the first target object detection model. The preprocessing may include, for example, image scaling preprocessing and normalization preprocessing.

Exemplarily, the image scaling preprocessing may be to scale the first image to a size of 608 ^{∗} 608, and the normalization preprocessing may be to divide the pixel values of the first image by 255.

Exemplarily, the output of the first target object detection model may be a position information of a detection box including the first target information. The position information of the detection box may include a confidence of the detection box, an X coordinate of the upper left corner of the detection box, a Y coordinate of the upper left corner of the detection box, a width value of the detection box, and a height value of the detection box.

FIG. 5 schematically shows a schematic diagram of determining a second target object and a category of the second target object in the method of detecting an event according to another embodiment of the present disclosure.

According to another embodiment of the present disclosure, a specific example of determining the second target object and the category of the second target object in the method of detecting an event may be implemented as follows. Those skilled in the art may understand that the example method shown in FIG. 5 may be executed after operation S210 shown in FIG. 2, for example, to determine the second target object and the category of the second target object according to the second image.

As shown in FIG. 5, at operation S510, the second target object in the second image 502 is detected by using the second target object detection model 503, so as to obtain the position information of the second target object and the category information 504 of the second target object.

The method of detecting an event according to the embodiment of the present disclosure may automatically and accurately determine the second target object, the position information of the second target object, and the category information of the second target object in the second image by using the second target object detection model.

Exemplarily, the second image may be preprocessed before the second image is input into the second target object detection model to avoid interference or other adverse effects of the second image on the detection of the second target object detection model. The preprocessing may include, for example, image scaling preprocessing and normalization preprocessing.

Exemplarily, the image scaling preprocessing may be to scale the second image to a size of 608 ^{∗} 608, and the normalization preprocessing may be to divide the pixel values of the second image by 255.

Exemplarily, the output of the second target object detection model may be the position information of the detection box including the second target information. The position information of the detection box may include a confidence of the detection box, an X coordinate of the upper left corner of the detection box, a Y coordinate of the upper left corner of the detection box, a width value of the detection box, and a height value of the detection box.

Exemplarily, the first target object detection model and / or the second target object detection model may include a PaddlePaddle-Yolo model.

PaddlePaddle-YOlO model, i.e. PP-YOLO, is a target detector. YOLO (You Only Look Once) is a target detection framework. The PaddlePaddle-YOLO model may be directly applied in practical application scenarios, and has relatively balanced effectiveness and efficiency. Accordingly, it is possible to avoid a substantial increase of the number of parameters of the mode and the number of floating-point operations per second of the model, and thus the detector accuracy may be improved as much as possible while keeping the speed almost unchanged. The method of detecting an event according to the embodiment of the present disclosure may quickly and accurately detect the position information of the first target object and / or the position information and category information of the second target object by using the PaddlePaddle-YOLO model.

Exemplarily, the first target object may include a human body object, the second target object may include a garbage object, and categories of the second target object may include a category of dry garbage and a category of wet garbage.

The method of detecting an event according to the embodiment of the present disclosure may be applied to detect a garbage classification in putting garbage.

Garbage classification may be understood as a series of actions of storing, putting and transporting the garbage by categories in a certain standard, which may improve the resource value of garbage, reduce the amount of garbage treatments and the usage of garbage treatment equipment, and reduce the cost in garbage treatment. With the popularization of garbage classification, putting garbage by categories has become a focus in the community and other places.

The method of detecting an event according to the embodiment of the present disclosure may automatically and accurately detect the event that a human object puts garbage by categories, determine the association between a certain human object and the category of the corresponding garbage object, so as to determine whether the human object puts garbage in categories correctly, reduce the labor cost in detecting the garbage classification event, and improve the efficiency and accuracy in detecting the event of putting garbage by categories.

The embodiments of the present disclosure exemplarily show that categories of garbage objects may include a category of dry garbage and a category of wet garbage. It should be understood that the categories of garbage objects may include a category of harmful garbage, a category of kitchen garbage, etc.. Specific categories of garbage objects are not limited here.

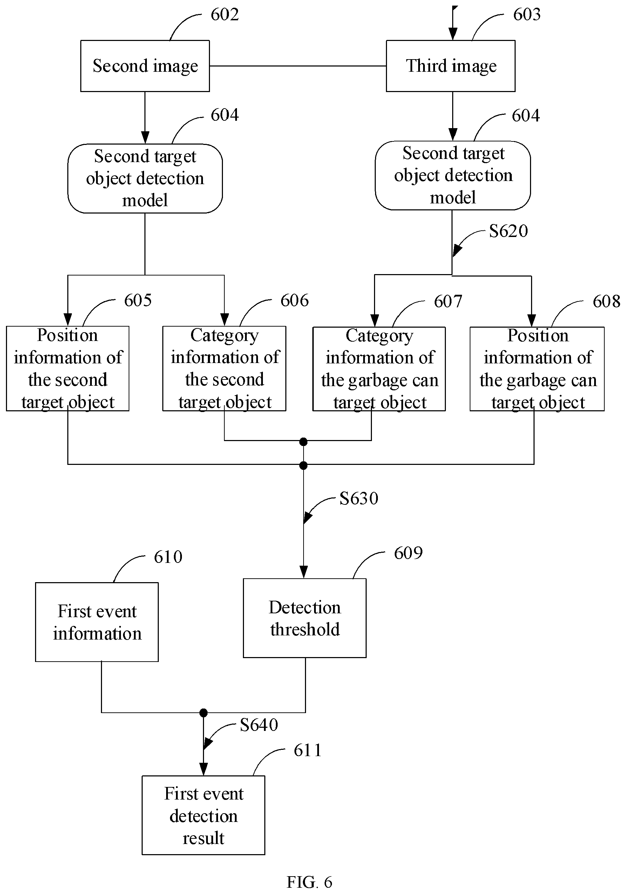

FIG. 6 schematically shows a schematic diagram of obtaining a first event detection result in the method of detecting an event according to another embodiment of the present disclosure.

According to another embodiment of the present disclosure, a specific example of obtaining the first event detection result in the method of detecting an event may be implemented as follows. Those skilled in the art may understand that the example method shown in FIG. 6 may be executed after the operation S230 shown in FIG. 2, for example, to compare the first event information with the detection threshold to obtain the first event detection result.

As shown in FIG. 6, at operation S610, a third image 603 including a garbage can object is obtained.

In the event of putting garbage by categories, judging whether a certain category of garbage object is correctly put is based on the detected garbage object, and also based on whether the detected garbage object of a certain category is in the garbage can of a corresponding category.

At operation S620, in a case that the second image 602 is associated with the third image 603, the garbage can object in the third image 603 is detected by using the second target object detection model 604, so as to obtain the position information 608 of the garbage can object and the category information 607 of the garbage can object. The categories of the garbage can objects may include a category of dry garbage can and a category of wet garbage can.

In the above embodiments, the garbage object and the garbage can object do not appear in the same image, but respectively appear in the second image and the third image. The human body object and the garbage can object do not appear in the same image, but respectively appear in the first image and the third image. The human body object may be determined according to the first image. The position information and category information of the garbage object are determined according to the second image. The position information and category information of the garbage can object are determined according to the third image.

In another embodiment, the garbage object and the garbage can object may appear in a certain image N at the same time, and the position information and category information of the garbage object may be determined according to the image N, and the position information and category information of the garbage can object may also be determined according to the image N. In another embodiment, the human body object and the garbage can object may appear in a certain image O at the same time, the position information of the human body object may be determined according to the image O, and the position information and category information of the garbage can object may also be determined according to the image O.

The association between the second image 602 and the third image 603 may be understood as the association relationship between the garbage object in the second image 602 and the garbage can object in the third image 603. It may be determined whether a certain category of garbage object in the second image 602 is correctly placed in the corresponding category of garbage can object by associating the second image 602 with the third image 603 which is collected at the same time instant as the second image 602.

The embodiments of the present disclosure exemplarily show that the categories of garbage can objects may include a category of dry garbage can and a category of wet garbage can. It should be understood that the categories of garbage can objects may include a category of harmful garbage can, a category of kitchen waste garbage can, etc.. Specific categories of garbage can objects are not limited here.

It is also possible to determine the overflow garbage outside the garbage can object by using the position information of the garbage object and the position information of the garbage can object. After the overflow garbage is detected, the position information of the overflow garbage may be prompted to the relevant person. For example, the relevant person may make a decision: replacing the garbage can object.

At operation S630, a detection threshold value 609 is determined based on the position information 605 of the second target object and the position information 608 of the garbage can object, and the category information 606 of the second target object and the category information 607 of the garbage can obj ect.

It should be understood that, based on the position information 605 of the second target object and the position information 608 of the garbage can object, it is possible to determine whether the garbage object is put in the garbage can. Based on the category information 606 of the second target object and the category information 607 of the garbage can object, it is possible to determine whether a certain category of garbage object is correctly put in the corresponding category of garbage can object. The detection threshold 609 may be used to determine whether the garbage object is put in the garbage can and whether a certain category of garbage object is correctly put in the corresponding category of garbage can object.

At operation S640, the first event information 610 is compared with the detection threshold 609 to obtain a first event detection result 611.

The method of detecting an event according to the embodiment of the present disclosure may automatically and accurately detect the event that a human object puts garbage by categories, based on the position information of garbage object and the position information of garbage can object, as well as the category information of garbage object and the category information of garbage can object, thereby reducing the labor cost in detecting the garbage inputting by categories, and improving the efficiency and accuracy of in detecting the garbage classification event.

The following will exemplarily describe the method of detecting an event of the embodiment of the present disclosure applied to the scenario of inputting garbage by categories.

Three cameras C1, C2 and C3 may be oriented at respective angles at which the human body object, the garbage object and the garbage can object may be captured respectively. For example, camera C2 for capturing the garbage object may be located above the opening of the garbage can object. The first image, the second image and the third image may be respectively obtained by the three cameras C1, C2 and C3, and the first image, the second image and the third image collected at the same time instant may be associated with each other to ensure the accuracy of the first event information. For example, when the human body object puts dry garbage into the wet garbage can, camera C1 captures the first image and the first image may be processed by using the first target object detection model, so that the human body object in the first image may be determined as the first target object. Camera C2 captures the second image, and the second image may be processed by using the second target object detection model to determine the position information of the garbage object and the category information of the garbage object in the second image, so that the garbage object is determined as the second target object. Camera C3 captures the third image, and the third image may be processed by using the second target object detection model to determine the position information and category information of the garbage can object in the third image, thereby obtaining the first event information, that is, the human body object, the dry garbage and the wet garbage can. The first event information may be compared with the detection threshold to obtain the first event detection result: the garbage classification is wrong.

For example, when the garbage classification is wrong, the relevant person may be prompted. The relevant person may check the first image to confirm the identity of the specific human object, and educate the human object with the wrong garbage classification.

According to an embodiment of the present disclosure, the present disclosure also provides an apparatus of detecting an event.

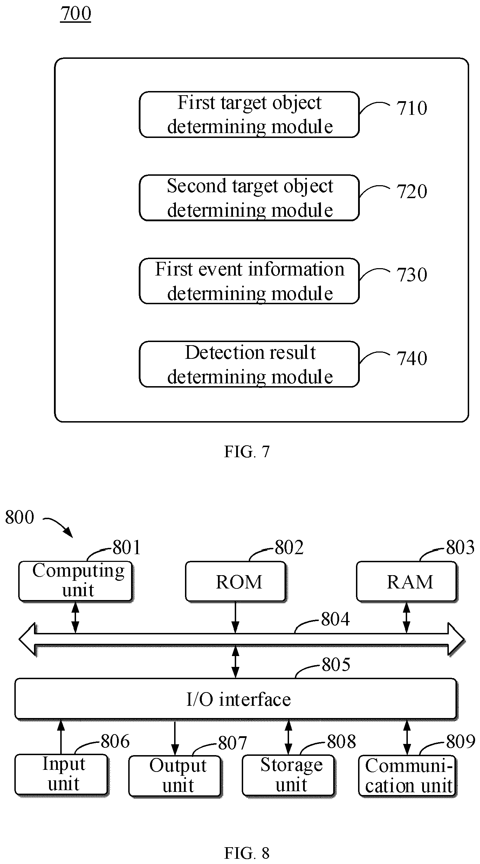

As shown in FIG. 7, the event detection device 700 according to the embodiment of the present disclosure includes a first target object determining module 710, a second target object determining module 720, a first event information determining module 730, and a detection result determining module 740.

The first target object determining module 710 is configured to determine a first target object according to a first image. In one embodiment, the first target object determining module 710 may be used to perform the above operation S210, and will not be described here.

The second target object determining module 720 is configured to determine a second target object and a category of the second target object according to a second image. In one embodiment, the second target object determining module 720 may be used to perform the above operation S220, and will not be described here.

The first event information determining module 730 is configured to associate the first target object with the category of the second target object to obtain a first event information. In one embodiment, the first event information determining module 730 may be used to perform the above operation S230, and will not be described here.

The detection result determining module 740 is configured to compare the first event information with the detection threshold to obtain the first event detection result. In one embodiment, the detection result determining module 740 may be used to perform the above operation S240, and will not be described here.

The apparatus of detecting an event according to an embodiment of the present disclosure, wherein the first event information determining module may include an association target determining sub-module and a first event information determining sub-module.

The association target determining sub-module may be configured to determine the first target object closest to the position of the second target object as an association target object according to a position information of the first target object in the first image and a position information of the second target object in the second image in a case of determining that the first image is associated with the second image.

The first event information determining sub-module may be configured to determine the first event information according to the category of the second target object and the associated target object corresponding to the second target object.

The apparatus of detecting an event according to an embodiment of the present disclosure, wherein the first target object determining module may include a first information determining sub-module.

The first information determining sub-module may be configured to detect a first target object in the first image by using a first target object detection model, to obtain the position information of the first target object.

The apparatus of detecting an event according to the embodiment of the present disclosure, wherein the second target object determining module may include a second information determining sub-module.

The second information determining sub-module may be configured to detect a second target object in the second image by using a second target object detection model, to obtain the position information of the second target object and a category information of the second target object.

The apparatus of detecting an event according to an embodiment of the present disclosure, wherein the first target object detection model and / or the second target object detection model include a PaddlePaddle-YOLO model.

The apparatus of detecting an event according to an embodiment of the present disclosure, wherein the first target object includes a human body object, the second target object includes a garbage object, and categories of the second target objects include a category of dry garbage and a category of wet garbage.

According to the apparatus of detecting an event of the embodiment of the present disclosure, the detection result determining module may include a third image obtaining sub-module, a garbage can object determining sub-module, a detection threshold determining sub-module, and a detection result determining sub-module.

The third image obtaining sub-module may be configured to obtain a third image including a garbage can object.

The garbage can object determining sub-module may be configured to detect the garbage can object in the third image by using the second target object detection model to obtain a position information of the garbage can object and a category information of the garbage can object, in a case of the second image being associated with the third image, wherein categories of the garbage can object include a category of dry garbage can and a category of wet garbage can.

The detection threshold determining sub-module may be configured to determine the detection threshold according to the position information of the second target object and the position information of the garbage can object, and the category information of the second target object and the category information of the garbage can object.

The detection result determining sub-module may be configured to compare the first event information with the detection threshold to obtain the first event detection result.

It should be understood that the embodiments of the device part of the present disclosure correspond to the same or similar to the embodiments of the method part of the present disclosure, and the technical problems solved and the technical effects achieved also correspond to the same or similar. The present disclosure will not be repeated here.

According to the embodiments of the present disclosure, the present disclosure further provides an electronic device, a readable storage medium, and a computer program product.

FIG. 8 shows a schematic block diagram of an example electronic device 800 that may be used to implement the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 8, the electronic device 800 may include computing unit 801, which may perform various appropriate actions and processing based on a computer program stored in a read-only memory (ROM) 802 or a computer program loaded from a storage unit 808 into a random access memory (RAM) 803. Various programs and data required for the operation of the electronic device 800 may be stored in the RAM 803. The computing unit 801, the ROM 802 and the RAM 803 are connected to each other through a bus 804. An input/output (I/O) interface 805 is further connected to the bus 804.

Various components in the electronic device 800 connected with I/O interface 805, including an input unit 806, such as a keyboard, a mouse, etc.; an output unit 807, such as various types of displays, speakers, etc.; a storage unit 808, such as a magnetic disk, an optical disk, etc.; and a communication unit 809, such as a network card, a modem, a wireless communication transceiver, etc.. The communication unit 809 allows the electronic device 800 to exchange information/data with other devices through a computer network such as the Internet and/or various telecommunication networks.

The computing unit 801 may be various general-purpose and/or special-purpose processing components with processing and computing capabilities. Some examples of the computing unit 801 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 801 may perform the various methods and processes described above, such as the method of detecting an event. For example, in some embodiments, the method of detecting an event may be implemented as a computer software program that is tangibly contained on a machine-readable medium, such as a storage unit 808. In some embodiments, part or all of a computer program may be loaded and/or installed on the electronic device 800 via the ROM 802 and/or the communication unit 809. When the computer program is loaded into the RAM 803 and executed by the computing unit 801, one or more steps of the method of detecting an event described above may be performed. Alternatively, in other embodiments, the computing unit 801 may be configured to perform the method of detecting an event in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also referred to as a cloud computing server or a cloud host. It is a host product in the cloud computing service system to solve the defects of the traditional physical host and VPS service ("virtual private server", or "VPS") that are difficult to manage and weak in business expansion. The server may also be a server of a distributed system or a server combined with a blockchain.

In the technical solution of the present disclosure, the recording, storage and application of the first image, the second image and the third image all comply with the relevant laws and regulations, and do not violate the public order and morals.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of detecting an event, comprising:
determining (S210) a first target object according to a first image;
determining (S220) a second target object and a category of the second target object according to a second image;
associating (S230) the first target object with the category of the second target object to obtain a first event information; and
comparing (S240) the first event information with a detection threshold to obtain a first event detection result.

2. The method of claim 1, wherein the associating the first target object with the category of the second target object to obtain a first event information comprises:
in a case of determining that the first image is associated with the second image, determining the first target object closest to a position of the second target object as an associated target object, according to a position information of the first target object in the first image and a position information of the second target object in the second image; and
determining the first event information according to the category of the second target object and the associated target object corresponding to the second target object.

3. The method of claim 2, wherein the determining a first target object according to a first image comprises:
detecting the first target object in the first image (401) by using a first target object detection model (402), to obtain the position information (403) of the first target object.

4. The method of claim 3, wherein the determining a second target object and a category of the second target object according to a second image comprises:
detecting the second target object in the second image (502) by using a second target object detection model (503), to obtain the position information (504) of the second target object and a category information (504) of the second target object.

5. The method of claim 4, wherein the first target object detection model and / or the second target object detection model comprise a PaddlePaddle-YOLO model.

6. The method of claim 4 or 5, wherein the first target object comprises a human body object, the second target object comprises a garbage object, and categories of the second target object comprise a category of dry garbage and a category of wet garbage.

7. The method of claim 6, wherein the comparing the first event information with a detection threshold to obtain a first event detection result comprises:
obtaining a third image (603) comprising a garbage can object;
in a case of the second image (602) being associated with the third image (603), detecting the garbage can object in the third image (603) by using the second target object detection model (604), to obtain a position information (608) of the garbage can object and a category information (607) of the garbage can object, wherein categories of the garbage can object comprise a category of dry garbage can and a category of wet garbage can;
determining the detection threshold (609) according to the position information (605) of the second target object and the position information (608) of the garbage can object, and the category information (606) of the second target object and the category information (607) of the garbage can object; and
comparing the first event information (610) with the detection threshold (609) to obtain the first event detection result (611).

8. An apparatus (700) of detecting an event, comprising:
a first target object determining module (710) configured to determine a first target object according to a first image;
a second target object determining module (720) configured to determine a second target object and a category of the second target object according to a second image;
a first event information determining module (730) configured to associate the first target object with the category of the second target object to obtain a first event information; and
a detection result determining module (740) configured to compare the first event information with a detection threshold to obtain a first event detection result.

9. The apparatus of claim 8, wherein the first event information determining module comprises:
an association target determining sub-module configured to determine the first target object closest to a position of the second target object as an associate target object, according to a position information of the first target object in the first image and a position information of the second target object in the second image, in a case of determining that the first image is associated with the second image; and
a first event information determining sub-module configured to determine the first event information according to the category of the second target object and the associated target object corresponding to the second target object.

10. The apparatus of claim 9, wherein the first target object determining module comprises:
a first information determining sub-module configured to detect a first target object in the first image by using a first target object detection model, to obtain the position information of the first target object.

11. The apparatus of claim 10, wherein the second target object determining module comprises:
a second information determining sub-module configured to detect a second target object in the second image by using a second target object detection model, to obtain the position information of the second target object and a category information of the second target object.

12. The apparatus of claim 11, wherein the first target object detection model and / or the second target object detection model comprise a PaddlePaddle-YOLO model;
wherein the first target object comprises a human body object, the second target object comprises a garbage object, and categories of the second target object comprise a category of dry garbage and a category of wet garbage;
wherein the detection result determining module comprises:
a third image obtaining sub-module configured to obtain a third image comprising a garbage can object;
a garbage can object determining sub-module configured to detect the garbage can object in the third image by using the second target object detection model to obtain a position information of the garbage can object and a category information of the garbage can object, in a case of the second image being associated with the third image, wherein categories of the garbage can object comprise a category of dry garbage can and a category of wet garbage can;
a detection threshold determining sub-module configured to determine the detection threshold according to the position information of the second target object and the position information of the garbage can object, and the category information of the second target object and the category information of the garbage can object; and
a detection result determining sub-module configured to compare the first event information with the detection threshold to obtain the first event detection result.

13. An electronic device (800), comprising:
at least one processor (801); and
a memory (808), communicatively coupled with the at least one processor (801);
wherein the memory (808) stores instructions executable by the at least one processor (801), and the instructions, when executed by the at least one processor (801), cause the at least one processor (801) to perform the method of any one of claims 1 to 7.

14. A non-transitory computer readable storage medium storing computer instructions, wherein the computer instructions are configured to cause a computer to perform the method of any one of claims 1 to 7.

15. A computer program product comprising a computer program, wherein the computer program, when executed by a processer, implements the method of any one of claims 1 to 7.
